# EUROPEAN PATENT SPECIFICATION

(11) **EP 0 789 510 B1**
(45) Date of publication and mention of the grant of the patent: **21.01.2004**
(21) Application number: 95935768.2
(22) Date of filing: 02.11.1995
(51) Int. Cl.: A01N 25/14

(54) **WETTABLE POWDER FORMULATIONS**
BENETZBARE PULVERFORMULIERUNGEN
FORMULATIONS DE POUDRES MOUILLABLES

(30) Priority: 04.11.1994 AU PM926794
(43) Date of publication of application: 20.08.1997
(73) Proprietor: AGRICULTURE VICTORIA SERVICES PTY LTD, Melbourne, VIC 3004 (AU)
(72) Inventor: HAWKETT, Brian, Stanley, Mona Vale, NSW 2103 (AU); PARK, Hong, Yu, Mulgrave, VIC 3170 (AU); BLATT, Edward, Hawthorn, VIC 3122 (AU); ZHOU, Zhiping, Wheelers Hill, VIC 3150 (AU)
(74) Representative: Carpmaels & Ransford
(86) International application number: PCT/AU1995/000728
(87) International publication number: WO 1996/013975

(56) References cited:
- WO-A-93/14631
- WO-A-94/21121
- WO-A-95/04460
- WO-A-95/15081
- AU-A- 1 843 692
- AU-A- 3 795 389
- AU-A- 5 970 090
- AU-A- 8 130 391

## Description

This invention relates to wettable powder formulations, and in particular it relates to wettable powder formulations of post-emergent herbicides which require an adjuvant to enhance their efficacy. Post-emergent foliar herbicides are used to control weeds or other undesirable plants in, for example, a crop. Many such herbicides are relatively ineffective in the absence of an adjuvant to augment their performance.

In controlling undesirable plants, insects and fungi, liquid formulations of herbicides or pesticides such as emulsifiable concentrates (ECs) and suspension concentrates may be applied as a fine spray after being added to tank water. The emulsions formed must disperse such that particular entities in the spray water do not cause blockages in the filters and nozzles of the spraying equipment A number of problems of toxicity and inconvenience in practical use are associated with these formutations; including:
- the escape of volatile solvents to the environment
- problems of safe disposal
- accidental spillages of liquids (including solvents) which may cause toxic hazards
- flammability of solvents during storage and manufacture
- disposal of containers for toxic liquids
and in some formulations
- the need to use 2 separate packs (e.g. the EC in one pack and a surfactant or crop oil in a second pack).

In order to overcome the above problems, solid formulations of liquid herbicides or pesticides, presented as wettable powders or water-dispersible granules, have also been prepared. Techniques for the production of these solid formulations are known in the art, and include for example methods for incorporating liquid actives and active solutions into porous particles such as precipitated silica particles (see, for example, Rhone-Poulenc, "Auxiliaries for Agrochemical Formulations").

Previous attempt to formulate wettable powders using post-emergent herbicides which require an adjuvant to assist with such properties as leaf wetting or penetration have not been successful in that the powder formulation has inferior efficacy when compared to the standard EC-type formulation. This drop in efficacy is usually apparent even though large amounts of crop oil or other adjuvant are used. For this reason, use of ECs of this type of post-emergent herbicide persists despite the problems associated with their use.

In one important aspect, the present invention provides a process for the preparation of wettable powder formulations of post-emergent herbicides which require an adjuvant for foliar wetting or penetration, wherein the powder formulations have similar efficacy to the standard commercial EC of the same active ingredient. Moreover, the powder formulations of this invention do not require added crop oil or adjuvant to achieve efficacy.

Certain classes of post-emergent herbicides which must be applied to the leaves of the target plants are usually supplied as emulsifiable concentrates for addition to water immediately before application by spraying onto the target plants. A class of herbicide with specific foliar post-emergent application is the aryloxy-phenoxy-propionate class, or "fops". Up to now, herbicides in this class have generally been formulated as emulsifiable concentrates incorporating a crop oil and/or surfactant adjuvant, with the adjuvant being added to enhance efficiency in the control of targeted weeds. Occasionally, as in the case of 2-propynyl (R)-2-[4-(5-chloro-3-fluoro-2-pyridinyloxy)-phenoxy]-propionate, commonly known as "clodinafop" and previously also known as "piroxofop", a companion safener such as "cloquintocet" (5-chloro-8-quinolinoxyacetic acid-1-methylhexylester) is also added to the emulsifiable concentrate to ensure the safety of the crop. The effect of this safener is to act as a form of antidote to the post-emergent herbicide, that is to prevent or minimise damage to the crops such as wheat. In the past, clodinafop has not been successful formulated as a powder because the herbicide (and/or safener where present) degrades in storage. Furthermore, solvent residues can be unacceptable, and the efficiency of release of the herbicide from the powder formulation is often also unacceptable.

With post-emergent herbicides, where rapid and complete displacement (or "dumping") of the active ingredient out of the carrier matrix and into the spray water is necessary, the retention of portion of the herbicide within the powder tends to render the formulation less efficient than the corresponding EC. Furthermore, in the case of clodinafop, it has been found that incorporation into the carrier of the EC formulation of the herbicide containing a solvent such as a crop oil, and/or other adjuvants added to enhance efficiency, results in degradation of the herbicide in storage, and in reduced herbicidal efficacy because of partial retention of the active ingredient in the powder.

It has now been found that herbicidally active powder formulations of these post-emergent herbicides equivalent in efficiency to standard commercial EC formulations can be prepared, and that the use of undesirable solvents can be avoided, when certain solvent/adjuvant systems are used. In addition, it has been found that the degradation of clodinafop which occurs in the presence of carrier powders can be prevented by use of these solvent/adjuvant systems.

International Patent Publication No. WO 95/18531 (International Patent Application No. PCT/IB95/00001 in the name of Ciba-Geigy AG) discloses a wettable powder formulation comprising at least one herbicide, at least one porous solid carrier material and a nonionic surfactant, which is prepared by mixing the various components together.

WO93/14631 describes water dispersible granules suitable for agricultural application which are prepared by first preparing absorbent water dispersible granules and then loading biologically active substances into the preformed absorbent granules. The granules are used particularly for liquid pesticides.

As described in detail below, the wettable powder formulations of the present invention are characterised by the use of an adjuvant system which is both a solvent and adjuvant for the active component, and which provides effective release or dumping of the post emergent herbicide from the wettable powder formulation when it is added to water. These formulations are prepared by first dissolving the active component in the adjuvant system and then absorbing the solution into a carrier powder.

According to the present invention, there is provided a wettable powder formulation which comprises an internally porous carrier powder having a minimum internal pore volume of 20%, said carrier powder having incorporated therein a solution of a post-emergent herbicide in an effective adjuvant system, wherein the adjuvant system is both a solvent and adjuvant for said post-emergent herbicide, forms a stable solution of the post-emergent herbicide and provides effective release of the post-emergent herbicide when the powder formulation is added to water.

One particularly preferred group of active components are the aryloxyphenoxy-propionate ("fop") herbicides, however the present invention also extends to powder formulations comprising other herbicides including by way of example the cyclohexanediones (or "dims") and the diphenyl ethers, both of which are well known classes of post-emergent herbicides.

The adjuvant system forms a stable solution of the post emergent herbicide that is a solution in which a sufficient quantity of the post emergent herbicide is dissolved in the solvent without crystallisation or degradation. In addition, the adjuvant system forms an effective adjuvant system for enhancing the activity of the post-emergent herbicide in crop protection.

When the wettable powder formulation of this invention is added to water with stirring, the post emergent herbicide is released or dumped from the carrier powder in the form of an emulsion comprising small or even microscopic droplets without formation of crystals which are large enough to block spray equipment.

A particularly preferred adjuvant system for use in accordance with the present invention comprises at least one, essentially non-ionic alkylene oxide or organosilane surfactant. It is noted, however, that other non-ionic or ionic surfactants may be included in effective adjuvant systems in accordance with this invention in combination with one or more essentially non-ionic alkylene oxide or organosilane surfactant.

Suitable effective adjuvant systems for use in accordance with this invention may be readily identified by testing candidate surfactants or surfactant. or surfactant-containing mixtures for activity as an adjuvant and solvent for the particular biocide to ensure that a stable solution is formed, testing that when the solution of post emergent herbicide is added to water it readily forms an emulsion without formation of large crystals of biocide or adjuvant in the water, and then testing the resultant solutions after being added to the carrier powder to ensure effective release or dumping of the post emergent herbicide when the powder formulation is added to water.

The adjuvant system preferably is capable of dissolving the herbicide in the ratio of 1 part herbicide : 1 to 4 parts adjuvant system to form a stable solution. If desired, or necessary, an additional, non-adjuvant co-solvent may also be included in the adjuvant system in order to improve solvency of the herbicide or to decrease costs.

Preferred wettable powder formulations of post-emergent herbicides such as clodinafop in accordance with this invention are storage stable. The term "storage-stable" when used herein means that after a sample of the powder formulation has been kept for 14 days at 35°C, preferably 14 days at 54°C, the active therein (that is the herbicide and/or safener) has not significantly degraded as measured analytically.

Where the active component is clodinafop, the wettable powder formulation of this invention preferably also comprises a safener for the herbicide which is capable of dissolving in the adjuvant system. More preferably, the safener is capable of being dissolved in the adjuvant system in the ratio of 1 part safener:4 to 16 parts adjuvant system.

Optionally, the wettable powder formulation of this invention may also comprise one or more dispersants and/or wetting agents to assist in dispersion of the powder and in the formation of a stable emulsion when the powder formulation is dispersed into spray water.

Where the active component is the herbicide clodinafop in combination with the safener cloquintocet, the herbicidally active wettable powder formulation of this invention preferably has a herbicidal activity comparable to the product "Topik 80" (manufactured by Ciba-Geigy Limited), a commercial EC containing 8% clodinafop and 2% cloquintocet, or the product Topic 240 (manufactured by Giba-Geigy Limited) plus 1 % DC Trate (a crop oil product manufactured by Ampol).

Preferred fop herbicides for the incorporation into the wettable powder formulations of this invention are clodinafop, and quizalofop-p-tefuryl. The most preferred herbicidalformulation comprises 2-propyny)(R)-2-[4-(5-chloro-3-fluoro-2-pyridinyloxy)-phenoxy]-propionate or clodinafop (manufactured by Ciba-Geigy Limited). Another preferred post-emergent herbicide is the diphenylether oxyfluorfen.

The internally porous carrier powder of the formulation of this invention is preferably hydrophilic, and may comprise either porous particles or porous aggregates of discrete particles, for example, porous silica particles or precipitated silica aggregates, diatomaceous earth, precipitated calcium silicate, or the like. Preferably, the powder has a mean particle size in the 10-20 micron diameter range. In addition, it is preferred that the powder particles are such as to leave nil residue on a 45 micron sieve.

Typical carrier powders which can be used in the formulations of the present invention are:
- "Hi-Sil 257", a synthetic, amorphous, hydrated silica produced by PPG Industries Taiwan Ltd.;
- "Hi-Sil HOA", also a synthetic, amorphous, hydrated silica produced by PPG Industries Taiwan Ltd.;
- "Sipemat 50S", a ground, spray-dried, hydrated silica, manufactured by Degussa.
- "Hubersorb 600", a synthetic calcium silicate, manufactured by Huber Corporation.

The essentially non-ionic alkylene oxide surfactants which are the preferred adjuvant systems in formulations of the present invention are preferably ethylene oxide adducts; more preferably, the surfactant is an ethylene oxide adduct containing at least one mole of propylene oxide. Suitable surfactants include the nonionic surfactants described in International Patent Publication No. WO 95/18531.

Typical essentially non-ionic surfactants are biodegradable alkylene oxide adducts selected from the group consisting of alcohol alkoxylates such as "BS1000" and ''Teric 164", polyalkylene oxide adducts of synthetic alcohols such as "Teric BL8" and "Teric BL9" (commercially available in Australia under the above designations from ICI Australia), and Anterox BO327 (manufactured by Rhone-Poulenc).

As previously described, the adjuvant system may also comprise a combination of an essentially non-ionic alkylene oxide surfactant as described above with another surfactant, for example another non-ionic surfactant.

A preferred dispersant is the sodium salt of N-methyl-N-oleoyltaurate, available commercially under the trade name "Hostapon T" (manufactured by Hoechst).

Particularly preferred powder formulations of the present invention comprise the following, by weight:
(i) 5-25%(especially about 12-17%) post-emergent herbicide;
(ii) 30-50% (especially about 35-45%) essentially non-ionic alkylene oxide surfactant as adjuvant system;
(iii) 0-6% (especially about 4-5%) dispersant; and
(iv) 25-50% (especially about 30-45%) porous carrier powder.

When, in a preferred embodiment of this invention, the herbicide is clodinafop, an amount by weight of cloquintocet safener equivalent to about 25% of the clodinafop is preferably added.

In another aspect, the present invention also provides a process of preparing the wettable powder formulation of this invention which comprises the steps of dissolving the post emergent herbicide in the effective adjuvant system as defined above, and then incorporating the solution in the internally porous carrier powder by intimate mixing. Optional, a dispersant and/or wetting agent is then added. When a safener is used, the safener is dissolved with the herbicide in the adjuvant system.

The post emergent herbicide (and optional safener) and the adjuvant system form a genuine solution at the working concentrations of the biocide prior to combination with the carrier powder. Preferably, this solution will be stable (that is, non-crystallising) in the presence of the carrier powder at ambient storage temperatures. For some active components, it may be necessary to dissolve the active component at elevated temperatures in order to reduce the time required for dissolution. By way of example, in the case of clodinafop it is preferred to use a temperature of between 50°C and 60°C. The major advantage of this formulation is that the active ingredient is rapidly, effectively, and maximally released when the formulation is dispersed in water. Consequently the formulation displays superior biological activity.

This invention also extends to an aqueous dispersion of a wettable powder formulation as described above.

In another aspect, this invention provides a method of administering a post-emergent herbicide at a locus, which comprises:
forming an aqueous dispersion of a wettable powder formulation as described above; and
applying an effective amount of said aqueous dispersion at said locus.

In another aspect, the present invention provides a method for post-emergent herbicidal treatment of target weeds in a crop, which comprises:
forming an aqueous dispersion of a wettable powder formulation as described above; and
applying a herbicidally effective amount of said aqueous dispersion to the crop.

As previously discussed, it has been discovered that of the many possible adjuvants used as tank mixers with ECs, only some of these, particularly those of the essentially non-ionic alkylene oxide type, may be suitable for powdered formulations of biocides such as the post-emergent herbicides and particularly the fop herbicides, such that bio-efficacy is maintained. In addition, the powder formulations of the present invention can provide storage-stability as well as safety and ease of application in the field through packaging of the ensuing wettable powder formulations in water-soluble bags.

Throughout this specification, unless the context requires otherwise, the word "comprise", or variations such as "comprises" or "comprising", will be understood to imply the inclusion of a stated integer or group of integers but not the exclusion of any other integer or group of integers.

Further features of the present invention are more fully described in the following Example(s). It is to be understood, however, that this detailed description is included solely for the purposes of exemplifying the present invention, and should not be understood in any way as a restriction of the invention as set out in the appended claims.

The following protocol has been used in the Examples to assess the effectiveness of adjuvant systems and the bio-efficacy of wettable powder formulations of post-emergent herbicides.

Plastic pots 10 cm in diameter were filled with Debco potting mix (AS 3743). Two seeds of the test species *(Avena sativa*) were sown 15 mm below the surface. Pots were placed in a glasshouse at 28-30°C during the day and 13-15°C at night, and maintained at an adequate moisture content. After emergence, the plants were thinned for uniformity to 1 seedling/pot. Plants were re-selected for uniformity at the 2½ to 3 leaf stage. Plants were sprayed in a laboratory track sprayer and returned to the glasshouse.

Herbicide formulations were evaluated using a dose response bio-assay. Each treatment contains 10 herbicide rates, with each rate containing seven replicates.

The calibrated track sprayer is fitted with 3 nozzles (Spraying systems® 11001) spaced at 50 cm. The boom spray moves along a fixed track, releasing a volume of 64 l/ha at 200 kPa pressure. Ground speed was 6 km/h. The distance between the nozzle and the soil surface was 35 cm (as recommended by the nozzle manufacturer).

Plants were assessed for fresh weight 14 days after spraying. The greater the loss of weight the greater is the herbicidal activity.

The powder formulations of these Examples are prepared by the following method:
The herbicide (for example, clodinafop, and its safener, cloquintocet) is dissolved in the adjuvant system with stirring and if desired heating to at least 20°C, preferably 50°C until all of the powder has dissolved. The solution is then slowly added to stirred carrier powder and mixing continued, maintaining a minimum temperature of 20°C, preferably 50°C, until the solution is absorbed into the carrier powder. Finally, dispersant is added to the stirred mixture and mixing continued until it is uniformly incorporated.

### EXAMPLES

Each of the following Examples was prepared by first preparing a solution of all ingredients listed above the carrier, loading the solution thus obtained into the carrier, and then thoroughly mixing in the dispersant.

The following Example demonstrates the simplest form of the invention, in which the active ingredient is dissolved in a single adjuvant/solvent and loaded into a carrier powder. A dispersant is added to assist in the dispersion of the powder in the spray water.

### Example 1

| | | % by Wt. |
|---|---|---|
| Active | Quizalofop-p-terfuryl 97% (Uniroyal Chemical) | 12.4 |
| Adjuvant | Teric BL9 (ICI) | 49.3 |
| Carrier | Sipemat 50s (Degussa) | 33.9 |
| Dispersant | Hostapon T (Hoechst) | 4.4 |

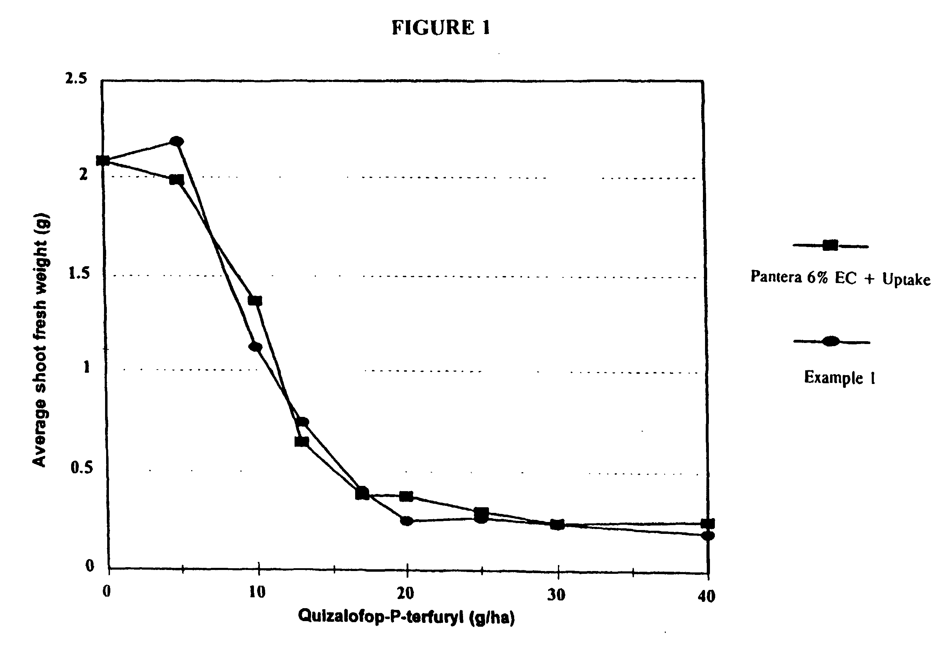

This formulation demonstrated equal bioefficacy to the standard Uniroyal Chemical EC, Pantera 6% EC (see Figure 1). Pantera 6% EC was sprayed using "Uptake" (a recommended crop oil adjuvant, manufactured by Dow Elanco) at 0.5% on spray water. Example 1 was sprayed without added adjuvant.

The following three Examples demonstrate the successful incorporation of a safener into powder formulations of this invention.

### Example 2

| | | % by Wt |
|---|---|---|
| Active | Clodinafop 98% (Ciba-Geigy) | 16.6 |
| Safener | Cloquintocet 95% (Ciba-Geigy) | 4.4 |
| Adjuvant | Teric BL8 (ICI) | 42.8 |
| Carrier | Sipemat 50s (Degussa) | 32.3 |
| Dispersant | Hostapon T (Hoechst) | 3.9 |

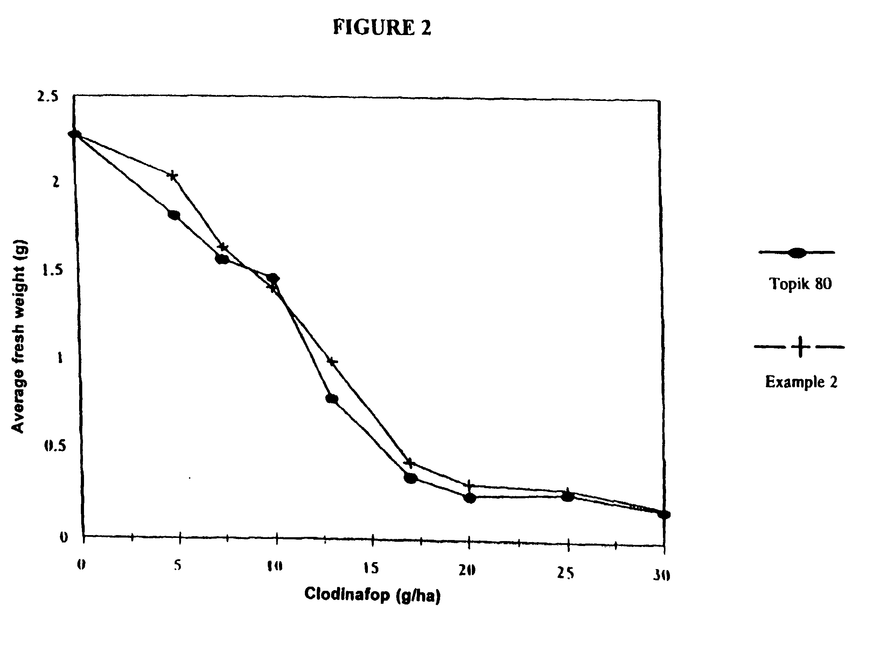

This formulation demonstrated equal bioefficacy to the standard Ciba-Geigy EC, Topic 80 (see Figure 2).

### Example 3

| | | % by Wt |
|---|---|---|
| Active | Clodinafop 98% (Ciba-Geigy) | 14.3 |
| Safener | Cloquintocet 95% (Ciba-Geigy) | 3.8 |
| Adjuvant | Teric BL9 (ICI) | 39.5 |
| Carrier | Sipemat 50s (Degussa) | 38.5 |
| Dispersant | Hostapon T (Hoechst) | 3.9 |

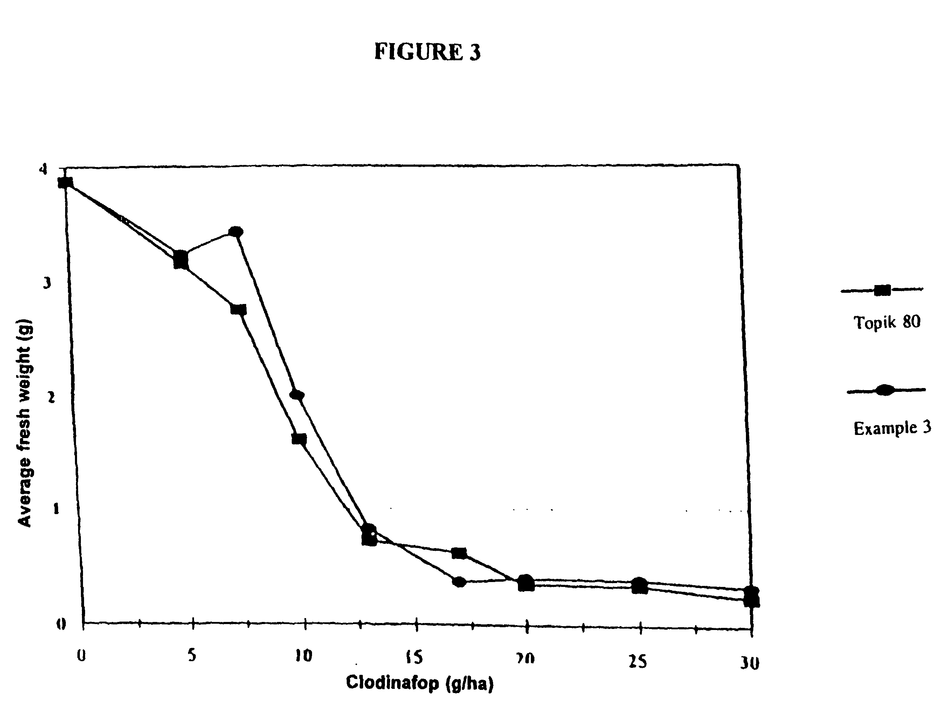

This formulation demonstrated equal bioefficacy to the standard Ciba-Geigy EC, Topic 80 (see Figure 3).

### Example 4

| | | % by Wt. |
|---|---|---|
| Active | Clodinafop 98% (Ciba-Geigy) | 14.4 |
| Safener | Cloquintocet 95% (Ciba-Geigy) | 3.6 |
| Adjuvant | BS1000 (ICI) | 35.0 |
| Carrier | Hisil 257 (PPG) | 43.1 |
| Dispersant | Hostapon T (Hoechst) | 5.1 |

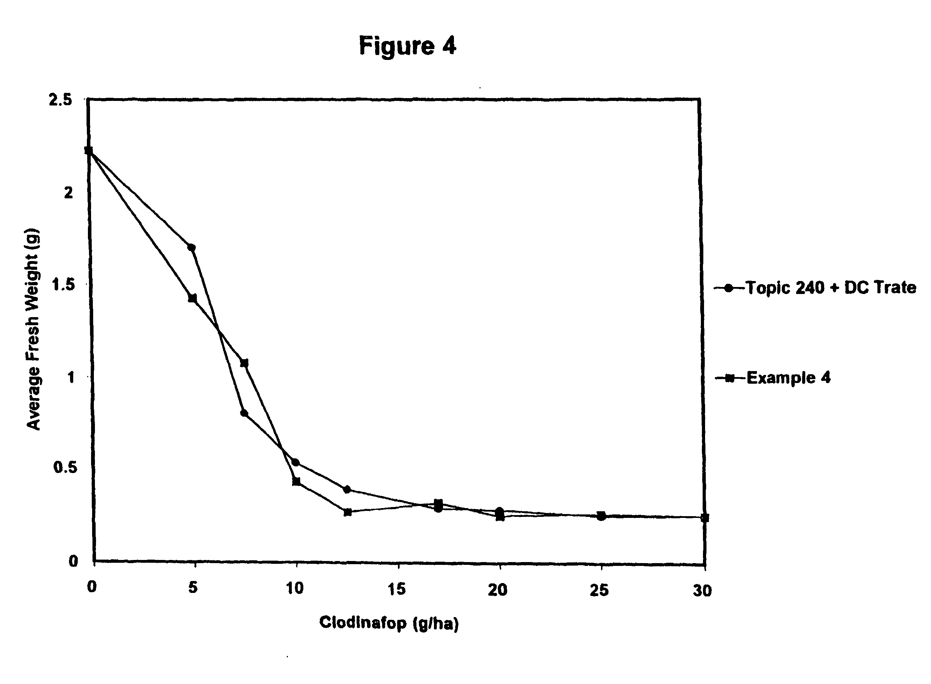

This formulation demonstrated equal bioefficacy to the standard Ciba-Geigy EC, Topic 240. Topic 240 was sprayed using DC Trate (a recommended crop oil adjuvant manufactured by Ampol) at 1 % on spray water. Example 4 was sprayed without added adjuvant (see Figure 4).

The following Example demonstrates the biological failure of a formulation for which the solution of active in adjuvant does not form a good emulsion when the formulation is added to the spray water.

### Example 5

| | | % by Wt. |
|---|---|---|
| Active | Clodinafop 98% (Ciba-Geigy) | 12.4 |
| Safener | Cloquintocet 95% (Ciba-Geigy) | 3.3 |
| Adjuvant | Pulse (Monsanto | 33.1 |
| Carrier | Hisil 257 (PPG) | 46.1 |
| Dispersant | Hostapon T (Hoechst) | 5.1 |

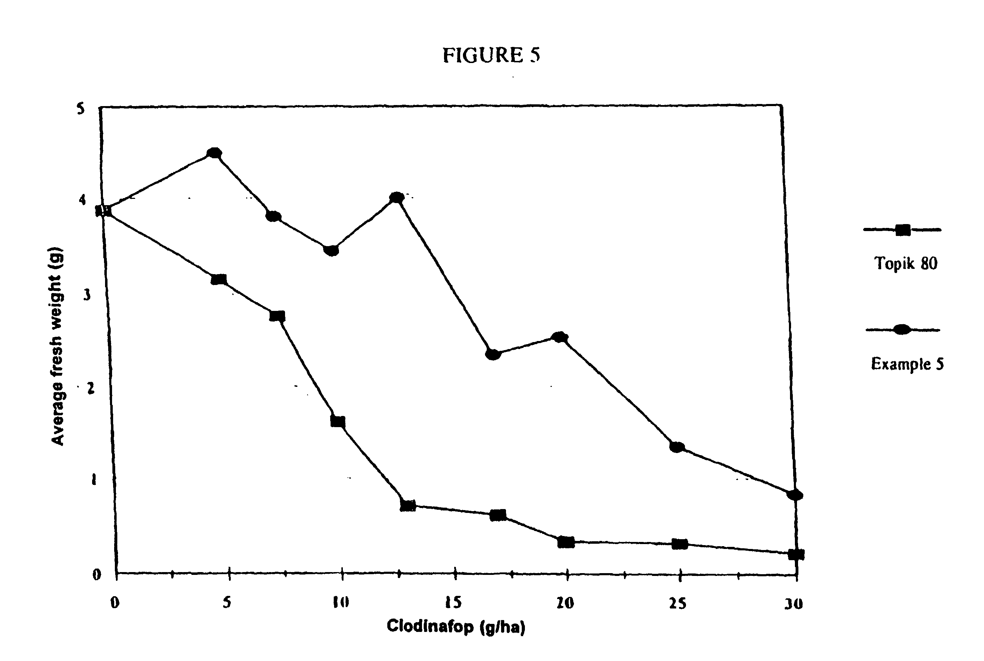

This formulation showed relatively poor bioefficacy when compared to the standard Ciba-Geigy EC, Topic 80 (see Figure 5).

The following two Examples demonstrate how the deficiencies of the type encountered in Example 5 can be overcome by the addition of a co-surfactant.

### Example 6

| | | % by Wt. |
|---|---|---|
| Active | Clodinafop 98% (Ciba-Geigy) | 10.6 |
| Safener | Cloquintocet 95% (Ciba-Geigy) | 2.7 |
| Adjuvant | Anterox BO327 (Rhone-Poulenc) | 40.3 |
| Co-surfactant | Teric 200 (ICI) | 9.5 |
| Carrier | Sipernat 50s (Degussa) | 32.9 |
| Dispersant | Hostapon T (Hoechst) | 4.0 |

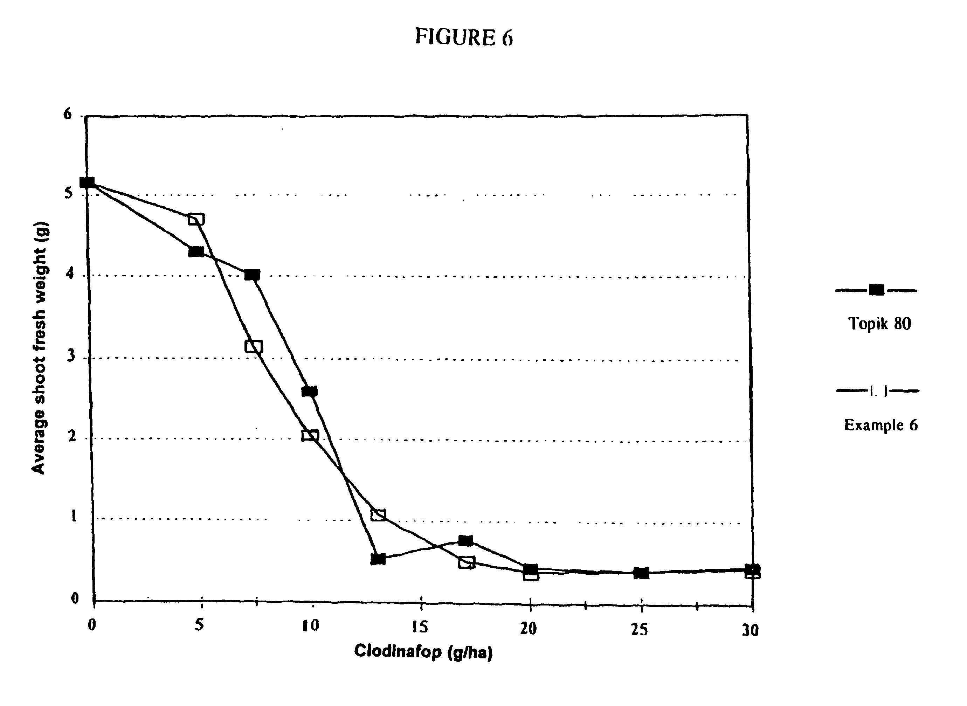

This formulation showed equal bioefficacy to the standard Ciba-Geigy EC, Topic 80 (see Figure 6).

### Example 7

| | | % by Wt. |
|---|---|---|
| Active | Clodinafop 98% (Ciba-Geigy) | 10.7 |
| Safener | Cloquintocet 95% (Ciba-Geigy) | 2.7 |
| Adjuvant 1 | Pulse (Monsanto) | 43.4 |
| Co-surfactant | Teric 200 (ICI) | 6.3 |
| Carrier | Sipemat 50s (Degussa) | 32.9 |
| Dispersant | Hostapon T (Hoechst) | 4.0 |

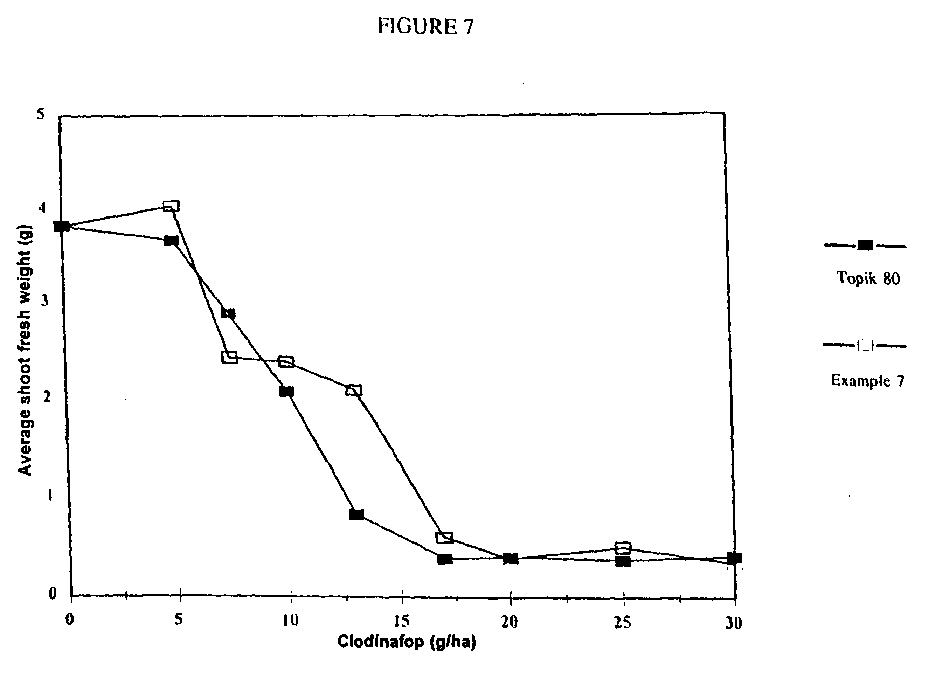

This formulation showed similar bioefficacy when compared to the standard Ciba-Geigy EC, Topic 80 (see Figure 7).

The following Example shows how deficiencies of the type encountered in Example 5 can be overcome by using a blend of adjuvants.

### Example 8

| | | % by Wt. |
|---|---|---|
| Active | Clodinafop 98% (Ciba-Geigy) | 10.7 |
| Safener | Cloquintocet 95% (Ciba-Geigy) | 2.7 |
| Adjuvant 1 | Pulse (Monsanto) | 24.9 |
| Adjuvant 2 | Teric BL8 (ICI) | 24.9 |
| Carrier | Sipernat 50s (Degussa) | 32.8 |
| Dispersant | Hostapon T (Hoechst) | 4.0 |

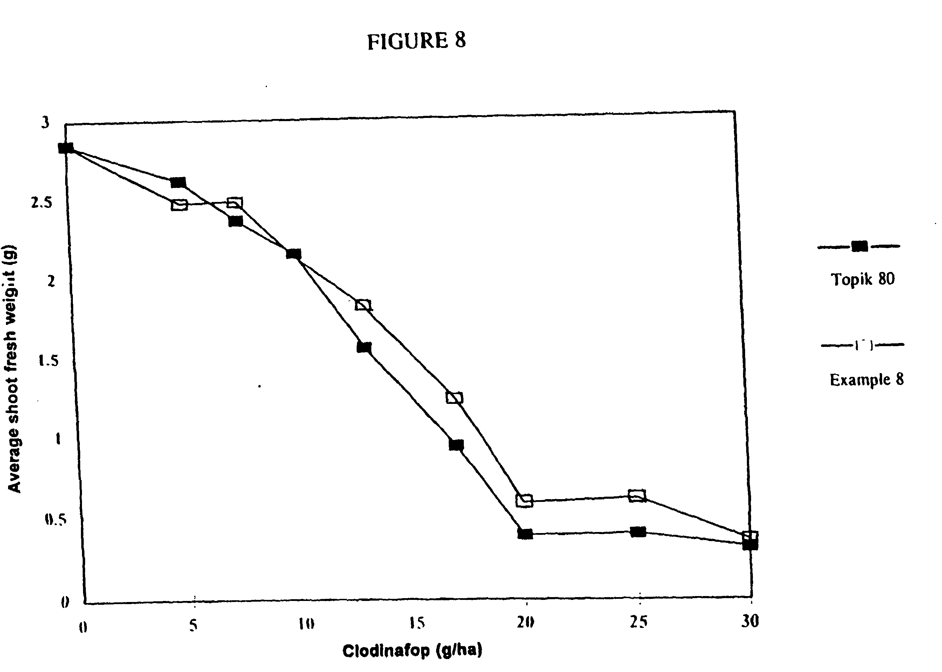

This formulation showed similar bioefficacy to the standard Ciba-Geigy EC, Topic 80 (see Figure 8).

The following Example shows how a proportion of the adjuvant can be replaced by a solvent with poor adjuvancy properties in order to increase solvency and reduce cost.

### Example 9

| | | % by Wt |
|---|---|---|
| Active | Clodinafop 98% (Ciba-Geigy) | 10.7 |
| Safener | Cloquintocet 95% (Ciba-Geigy) | 2.7 |
| Solvent | Solvesso 150 (Exxon) | 21.7 |
| Adjuvant | Teric BL8 (ICI) | 21.7 |
| Co-surfactant 1 | Alkanate CS (ICI) | 1.6 |
| Co-surfactant 2 | Teric 200 (ICI) | 4.7 |
| Carrier | Sipemat 50s (Degussa) | 32.9 |
| Dispersant | Hostapon T (Hoechst) | 4.0 |

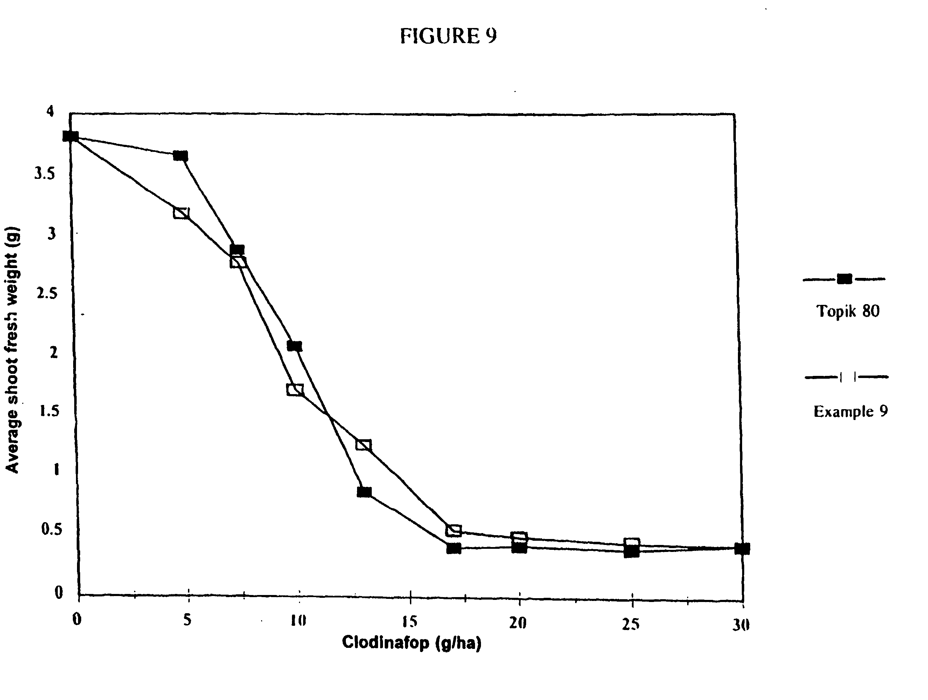

This formulation showed equal bioefficacy compared to the standard Ciba-Geigy EC, Topic 80 (see Figure 9).

The following three Examples show how a non-adjuvant co-solvent may be used to aid the solubilisation of the active ingredient.

### Example 10

| | | % by Wt. |
|---|---|---|
| Active | Oxyfluorfen 95% (recrystallised from Goal (Rohm and Haas)) | 4.6 |
| Co-solvent | Agsolex 1 (ISP) | 9.6 |
| Adjuvant | Teric BL8 (ICI) | 49.5 |
| Carrier | Sipemat 50s (Degussa) | 32.3 |
| Dispersant | Hostapon T (Hoechst) | 4.0 |

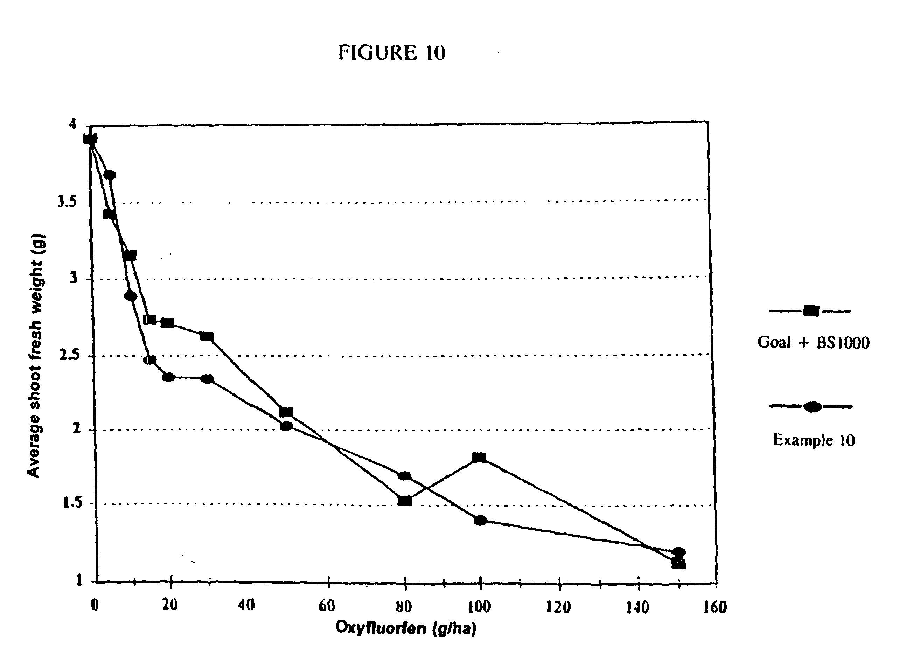

This formulation showed equal bioefficacy compared to the standard Rohm and Haas EC, Goal (see Figure 10). Goal was sprayed using BS1000 (a recommended adjuvant, manufactured by ICI) as added adjuvant at 0.25% on spray water. Example 10 was used without added adjuvant.

### Example 11

| | | % by Wt. |
|---|---|---|
| Active | Oxyfluorfen 72% (Rohm and Haas) | 5.6 |
| Co-solvent | Agsolex 1 (ISP) | 8.6 |
| Adjuvant | Teric BL8 (ICI) | 43.0 |
| Carrier | Hubersorb 600 (Huber Corp) | 38.8 |
| Dispersant | Hostapon T (Hoechst) | 4.0 |

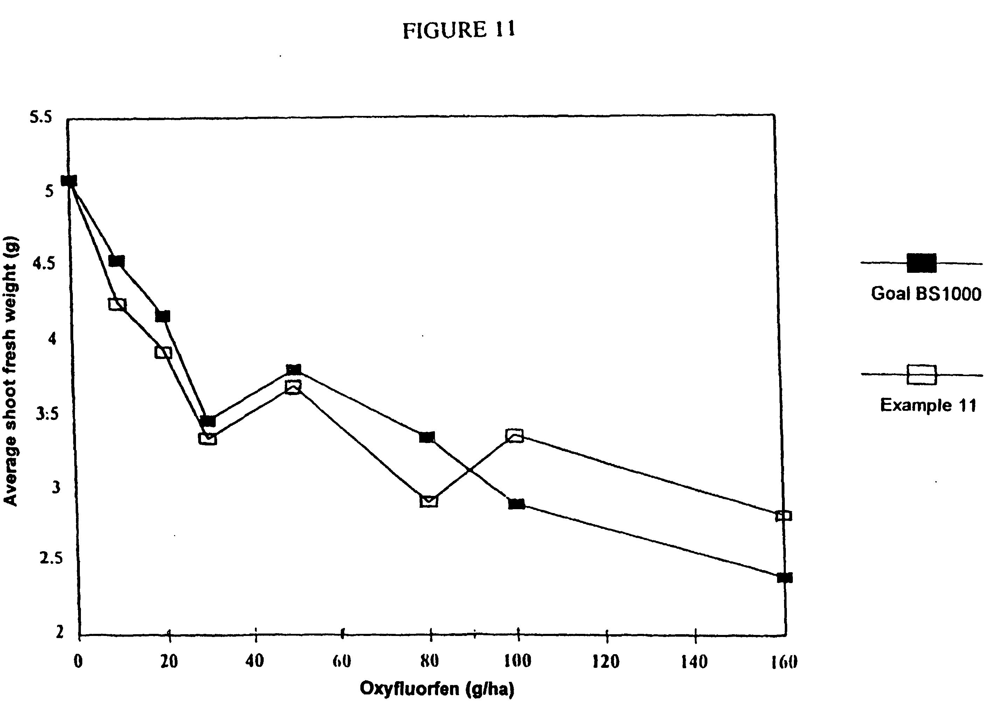

This formulation showed equal bioefficacy to the standard Rohm and Haas EC, Goal (see Figure 11). Goal was sprayed using BS1000 (a recommended adjuvant, manufactured by ICI) as added adjuvant at 0.25% on spray water. Example 11 was used without added adjuvant.

### Example 12

| | | % by Wt. |
|---|---|---|
| Active | Oxyfluorfen 72% (Rohm and Haas) | 5.6 |
| Co-solvent | Agsolex 1 (ISP) | 8.6 |
| Adjuvant | Pulse (Monsanto) | 43.0 |
| Co-surfactant | Teric 200 (ICI) | 6.6 |
| Carrier | Sipemat 50s (Degussa) | 32.2 |
| Dispersant | Hostapon T (Hoechst) | 4.0 |

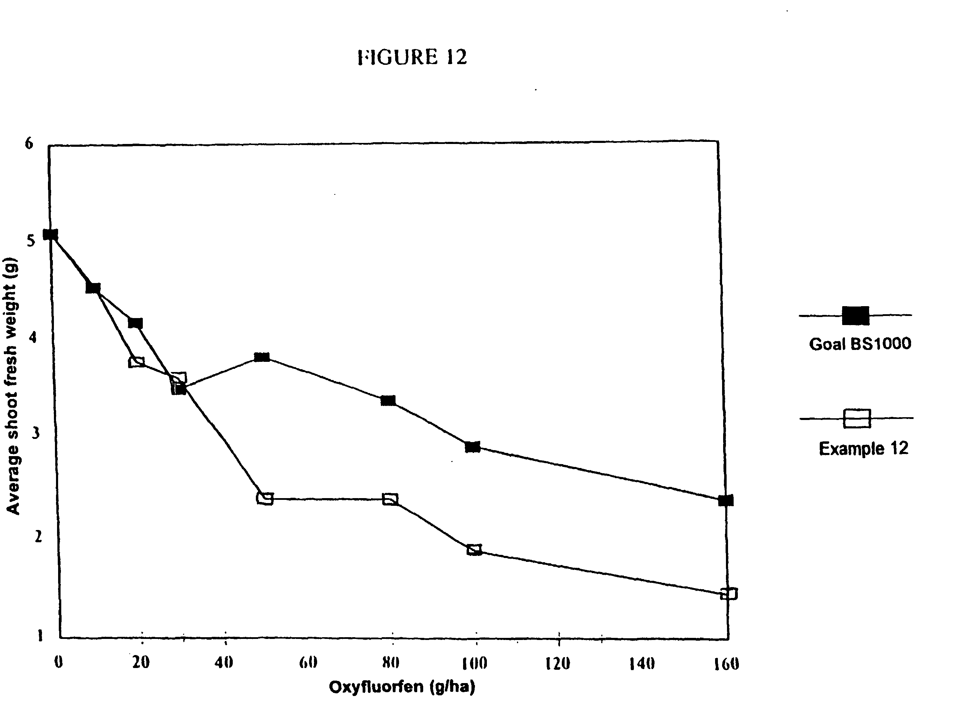

This formulation showed superior bioefficacy to the standard Rohm and Haas EC, Goal (see Figure 12). Goal was sprayed using BS1000 (a recommended adjuvant, manufactured by ICI) as added adjuvant at 0.25% on spray water. Example 12 was used without added adjuvant.

The following Examples demonstrate further problems which can be encountered when attempting to apply the teaching of this invention, but which can be overcome by an appropriate choice of ingredients.

### Example 13

| | | % by Wt. |
|---|---|---|
| Active | Clodinafop 98% (Ciba-Geigy) | 12.7 |
| Safener | Cloquintocet 95% (Ciba-Geigy) | 3.3 |
| Adjuvant | Teric 16M15 (ICI) | 33.2 |
| Carrier | Hisil 257 (PPG) | 45.7 |
| Dispersant | Hostapon T (Hoechst) | 5.1 |

This Example demonstrates the need to select adjuvants which do not react with the active ingredients. An adjuvant which reacts with one active may not react with another.

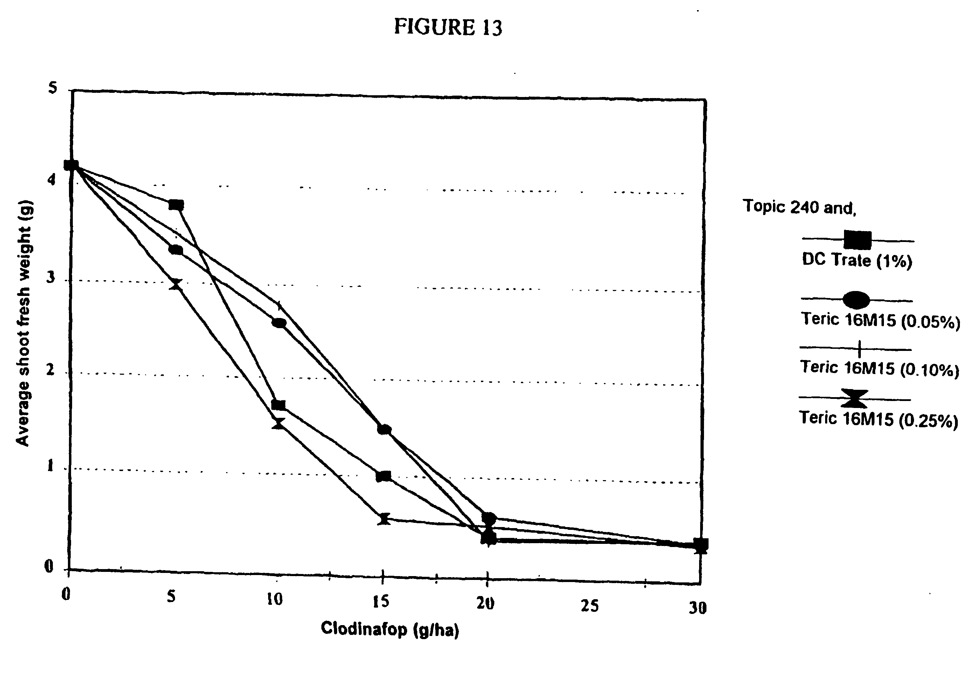

Teric 16M15 was found to be a good adjuvant when tank mixed with a commercial was found to be a good adjuvant when tank mixed with a commercial clodinafop EC (Topic 240, Ciba-Geigy). Figure 13 compares Topic 240 + DC Trate (a crop oil concentrate recommended by Ciba-Geigy, manufactured by Ampol) with Topic 240 + Teric 16M15 at three different rates. Although Teric 16M15 is shown to be an adjuvant, after two weeks at 54°C the active content of Example 13 had dropped from 12.7% to 5.6%. Thus, chemical stability of the solution must be considered.

### Example 14

| | | % by Wt. |
|---|---|---|
| Active | Clodinafop 98% (Ciba-Geigy) | 4.0 |
| Safener | Cloquintocet 95% (Ciba-Geigy) | 1.1 |
| Adjuvant 1 | Sunflower Oil | 30.6 |
| Adjuvant 2 | Agsolex 12 (ISP) | 3.3 |
| Co-solvent | Agsolex 1 (ISP) | 3.3 |
| Co-surfactant 1 | Teric 13A9 (ICI) | 3.2 |
| Co-surfactant 2 | Teric 17A2 (ICI) | 1.6 |
| Co-surfactant 3 | Teric CME3 (ICI) | 0.8 |
| Co-surfactant 4 | Teric 151 (ICI) | 1.6 |
| Carrier | Hisil 257 (PPG) | 45.8 |
| Dispersant 1 | Hostapon T (Hoechst) | 3.8 |
| Dispersant 2 | Morwet EFW (Witco) | 0.9 |

This Example uses a vegetable oil as the principal adjuvant. This Example demonstrates reductions in bioefficacy on storage when an inappropriate adjuvant is chosen. In a powder formulation, it is believed the vegetable oil tends to crosslink by reaction with oxygen, and once crosslinked no longer releases from the powder into the spray water.

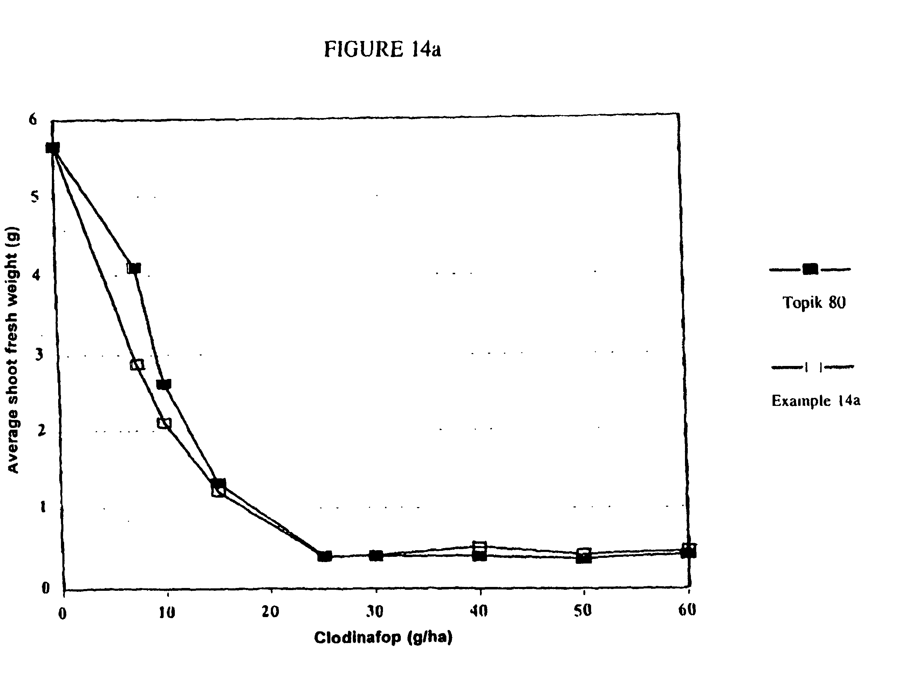

Figure 14a shows that Example 14 demonstrates similar bioefficacy to the standard Ciba-Geigy EC, Topic 80, when sprayed immediately after manufacture.

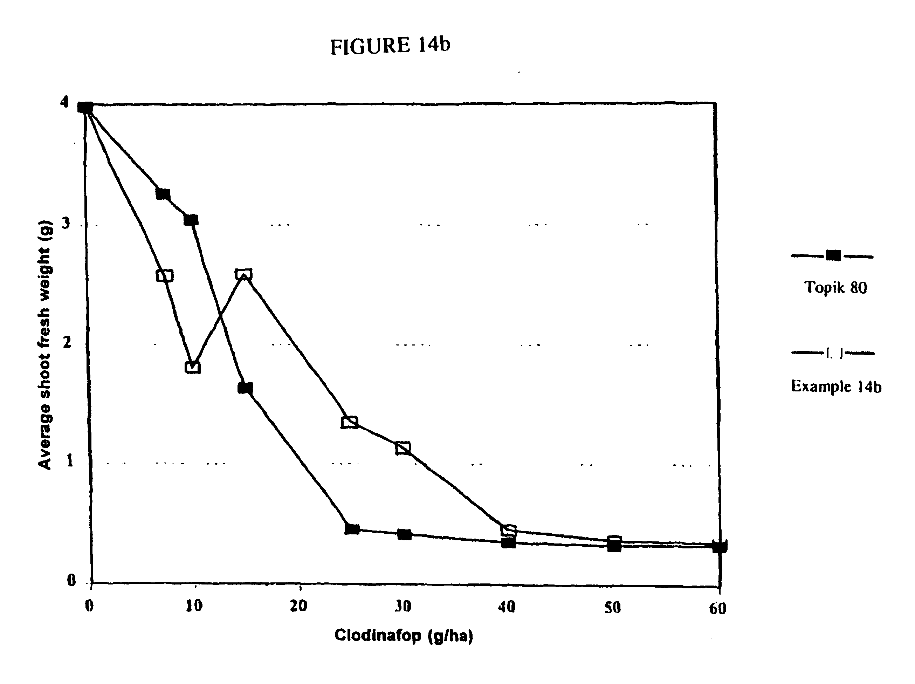

Figure 14b shows a considerable decrease in efficacy for Example 14 relative to the Topic 80 after storage of the powder for a period of 9 days at ambient temperature.

### Example 15

| | | % by Wt. |
|---|---|---|
| Active | Clodinafop 98% (Ciba-Geigy) | 11.2 |
| Safener | Cloquintocet 95% (Ciba-Geigy) | 2.8 |
| Adjuvant | BL8 (ICI) | 43.8 |
| Carrier | Hubersorb 600 (Huber Corp) | 38.3 |
| Dispersant | Hostapon T (Hoechst) | 3.9 |

This Example demonstrates the need to select a carrier which does not cause degradation of the active. Hubersorb 600 is basic in nature and therefore can only be used with actives which are stable to alkaline hydrolysis.

After two weeks storage at 54°C the active content of this Example had dropped from 11.2% to 6.4%.

In the accompanying drawings:
**Figure 1** compares the activity (on Avena sativa) of (a) Pantera 6% EC + 0.5% Uptake on spray water with (b) powder formulation of Example 1.
**Figure 2** compares the activity (on Avena sativa) of (a) Topic 80 with (b) powder formulation of Example 2.
**Figure 3** compares the activity (on Avena sativa) of (a) Topic 80 with (b) powder formulation of Example 3.
**Figure 4** compares the activity (on Avena sativa) of (a) Topic 240 + 1 % DC Trate on spray water with (b) powder formulation of Example 4.
**Figure 5** compares the activity (on Avena sativa) of (a) Topic 80 with (b) powder formulation of Example 5.
**Figure 6** compares the activity (on Avena sativa) of (a) Topic 80 with (b) powder formulation of Example 6.
**Figure 7** compares the activity (on Avena sativa) of (a) Topic 80 with (b) powder formulation of Example 7.
**Figure 8** compares the activity (on Avena sativa) of (a) Topic 80 with (b) powder formulation of Example 8.
**Figure 9** compares the activity (on Avena sativa) of (a) Topic 80 with (b) powder formulation of Example 9.
**Figure 10** compares the activity (on Avena sativa) of (a) Goal + 0.25% BS1000 on spray water with (b) powder formulation of Example 10.
**Figure 11** compares the activity (on Avena sativa) of (a) Goal + 0.25% BS1000 on spray water with (b) powder formulation of Example 11.
**Figure 12** compares the activity (on Avena sativa) of (a) Goal + 0.25% BS1000 on spray water with (b) powder formulation of Example 12.
**Figure 13** compares the activity (on Avena sativa) of (a) Topic 240 + 1% DC Trate on spray water with (b) Topic 240 + 0.05% Teric 16M 15 on spray water (c) Topic 240 + 0.1 % Teric 16M15 on spray water (d) Topic 240 + 0.25% Teric 16M15 on spray water.
**Figure 14a** compares the activity (on Avena sativa) of (a) Topic 80 with (b) powder formulation of Example 14 sprayed immediately after manufacture..
**Figure 14b** compares the activity (on Avena sativa) of (a) Topic 80 with (b) powder formulation of Example 14 sprayed nine days after manufacture.

## Claims

1. A wettable powder formulation which comprises an internally porous carrier powder having a minimum internal pore volume of 20%, said carrier powder having incorporated therein a solution of a post-emergent herbicide in an effective adjuvant system, wherein the adjuvant system is both a solvent and adjuvant for said post-emergent herbicide, forms a stable solution of the post-emergent herbicide and provides effective release of the post-emergent herbicide when the powder formulation is added to water.

2. A powder formulation according to claim 1, wherein the effective adjuvant system comprises at least one essentially non-ionic alkylene oxide or organosilane surfactant.

3. A powder formulation according to claim 1, wherein the effective adjuvant system comprises a mixture of at least one essentially non-ionic alkylene oxide or organosilane surfactant with one or more other non-ionic or ionic surfactants.

4. A powder formulation according to claim 2 or claim 3, wherein the or each non-ionic surfactant is an ethylene oxide adduct containing at least one mole of propyleneoxide.

5. A powder formulation according to any previous claim, wherein the post-emergent herbicide is an aryloxy-phenoxy-propionate, cyclohexanedione or diphenyl ether herbicide.

6. A powder formulation according to claim 5, wherein the post-emergent herbicide is clodinafop.

7. A powder formulation according to any previous claim, further comprising a safener for the post-emergent herbicide.

8. A powder formulation according to claim 7, wherein the safener is cloquintocet.

9. A powder formulation according to claim 1, further comprising one or more dispersants and/or wetting agents.

10. A powder formulation according to claim 9, wherein the dispersant is sodium N-methyl-N-oleoyltaurate.

11. A powder formulation according to claim 1, wherein the carrier powder is hydrophilic.

12. A powder formulation according to claim 1, wherein the carrier powder comprises porous silica particles or porous aggregates of silica particles.

13. A powder formulation according to claim 12, wherein the carrier powder has a mean particle size in the 10-20 micron diameter range.

14. A powder formulation according to claim 1, which comprises, by weight:
(i) 5-25% (preferably about 12-17%) post-emergent herbicide;
(ii) 30-50% (preferably about 35-45%) essentially non-ionic alkylene oxide surfactant as adjuvant system;
(iii) 0-6% (preferably about 4-5%) dispersant; and
(iv) 25-50% (preferably about 30-45%) carrier powder.

15. A powder formulation according to claim 14, comprising the post-emergent herbicide clodinafop, the safener cloquintocet, and wherein the amount of cloquintocet is about 25% by weight of the amount of clodinafop.

16. A process for preparing a powder formulation according to any of claims 1 to 15, which comprises the steps of dissolving the post-emergent herbicide in the effective adjuvant system, incorporating the solution in the carrier powder by intimate mixing, and optionally adding a dispersant and/or wetting agent.

17. An aqueous dispersion of a wettable powder formulation according to any of claims 1 to 15.

18. A method of administering a post-emergent herbicide at a locus, which comprises:
(i) forming an aqueous dispersion of a wettable powder formulation according to any of claims 1 to 15; and
(ii) applying an effective amount of said aqueous dispersion at said locus.

19. Use of an aqueous dispersion of a wettable powder formulation according to any of claims 1 to 15 for administering a post-emergent herbicide at a locus.

20. A method for post-emergent herbicidal treatment of target weeds in a crop, which comprises:
(i) forming an aqueous dispersion of a wettable powder formulation according to any of claims 1 to 15; and
(ii) applying a herbicidally effective amount of said aqueous dispersion to said crop.

21. Use of an aqueous dispersion of a wettable powder formulation according to any of claims 1 to 15 wherein the formulation is used for post-emergent herbicidal treatment of target weeds in a crop.

## Patentansprüche

1. Benetzbare Pulverformulierung, welche ein im Inneren poröses Trägerpulver mit einem Mindestinnenporenvolumen von 20% umfaßt, wobei das Trägerpulver darin eine Lösung eines nachfolgend in Erscheinung tretenden Herbizids in einem wirksamen Hilfsstoffsystem eingebracht aufweist, wobei das Hilfsstoffsystem sowohl ein Lösungsmittel als auch ein Hilfsstoff für das nachfolgend in Erscheinung tretende Herbizid ist, eine stabile Lösung des nachfolgend in Erscheinung tretenden Herbizids bildet und die wirksame Freisetzung des nachfolgend in Erscheinung tretenden Herbizids bereitstellt, wenn der Pulverformulierung Wasser zugefügt wird.

2. Pulverformulierung nach Anspruch 1, wobei das wirksame Hilfsstoffsystem mindestens ein im wesentlichen nicht-ionisches Alkylenoxid- oder Organosilan-grenzflächenaktives Mittel umfaßt.

3. Pulverformulierung nach Anspruch 1, wobei das wirksame Hilfsstoffsystem ein Gemisch von mindestens einem im wesentlichen nicht-ionischen Alkylenoxid- oder Organosilan-grenzflächenaktiven Mittel mit einem oder mehreren anderen nicht-ionischen oder ionischen grenzflächenaktiven Mitteln umfaßt.

4. Pulverformulierung nach Anspruch 2 oder 3, wobei das oder jedes nichtionische grenzflächenaktive Mittel ein Ethylenoxidadditionsprodukt ist, welches mindestens ein Mol Propylenoxid enthält.

5. Pulverformulierung nach einem der vorhergehenden Ansprüche, wobei das nachfolgend in Erscheinung tretende Herbizid ein Aryloxyphenoxypropionat-, Cyclohexandion- oder Diphenylether-Herbizid ist.

6. Pulverformulierung nach Anspruch 5, wobei das nachfolgend in Erscheinung tretende Herbizid Clodinafop ist.

7. Pulverformulierung nach einem der vorhergehenden Ansprüche, welche weiter einen Safener für das nachfolgend in Erscheinung tretende Herbizid umfaßt.

8. Pulverformulierung nach Anspruch 7, wobei der Safener Cloquintocet ist.

9. Pulverformulierung nach Anspruch 1, welche weiter ein oder mehrere Dispergiermittel und/oder Benetzungsmittel umfaßt.

10. Pulverformulierung nach Anspruch 9, wobei das Dispergiermittel Natrium N-methyl-N-oleoyltaurat ist.

11. Pulverformulierung nach Anspruch 1, wobei das Trägerpulver hydrophil ist.

12. Pulverformulierung nach Anspruch 1, wobei das Trägerpulver poröse Siliciumdioxidteilchen oder poröse Aggregate von Siliciumdioxidteilchen umfaßt.

13. Pulverformulierung nach Anspruch 12, wobei das Trägerpulver eine mittlere Teilchengröße im 10-20 Mikrometer Durchmesserbereich aufweist.

14. Pulverformulierung nach Anspruch 1, welche bezogen auf das Gewicht umfaßt:
(i) 5-25% (vorzugsweise etwa 12-17%) nachfolgend in Erscheinung tretendes Herbizid,
(ii) 30-50% (vorzugsweise etwa 35-45%) im wesentlichen nicht-ionisches Alkylenoxid-grenzflächenaktives Mittel als Hilfsstoffsystem,
(iii) 0-6% (vorzugsweise etwa 4-5%) Dispergiermittel und
(iv) 25-50% (vorzugsweise etwa 30-45%) Trägerpulver.

15. Pulverformulierung nach Anspruch 14, welche das nachfolgend in Erscheinung tretende Herbizid Clodinafop und den Safener Cloquintocet umfaßt, und wobei die Menge von Cloquintocet etwa 25 Gew.-% der Menge an Clodinafop ist.

16. Verfahren zur Herstellung einer Pulverformulierung nach einem der Ansprüche 1 bis 15, welches die Schritte des Lösens des nachfolgend in Erscheinung tretenden Herbizids im wirksamen Hilfsstoffsystem, des Einbringens der Lösung in das Trägerpulver durch inniges Vermischen und gegebenenfalls des Zugebens eines Dispergiermittels und/oder Benetzungsmittels umfaßt.

17. Wäßrige Dispersion einer benetzbaren Pulverformulierung nach einem der Ansprüche 1 bis 15.

18. Verfahren zur Verabreichung eines nachfolgend in Erscheinung tretenden Herbizids an einem Locus, welches umfaßt:
(i) das Bilden einer wäßrigen Dispersion einer benetzbaren Pulverformulierung nach einem der Ansprüche 1 bis 15 und
(ii) das Aufbringen einer wirksamen Menge der wäßrigen Dispersion an dem Locus.

19. Verwendung einer wäßrigen Dispersion einer benetzbaren Pulverformulierung nach einem der Ansprüche 1 bis 15 zur Verabreichung eines nachfolgend in Erscheinung tretenden Herbizids an einem Locus.

20. Verfahren zur Behandlung von Zielunkraut in einem Emtegut mit einem nachfolgend in Erscheinung tretenden Herbizid, welches umfaßt:
(i) das Bilden einer wäßrigen Dispersion einer benetzbaren Pulverformulierung nach einem der Ansprüche 1 bis 15 und
(ii) das Aufbringen einer herbiziden, wirksamen Menge der wäßrigen Dispersion auf das Emtegut.

21. Verwendung einer wäßrigen Dispersion einer benetzbaren Pulverformulierung nach einem der Ansprüche 1 bis 15, wobei die Formulierung zur Behandlung von Zielunkraut in einem Erntegut mit einem nachfolgend in Erscheinung tretenden Herbizid verwendet wird.

## Revendications

1. Formulation de poudre mouillable qui comprend une poudre support poreuse à l'intérieur ayant un volume minimum de pores internes de 20 %, ladite poudre support possédant incorporée en son sein une solution d'un herbicide de post-levée dans un système adjuvant efficace , dans laquelle le système adjuvant qui est à la fois un solvant et un adjuvant pour ledit herbicide de post-levée forme une solution stable de l'herbicide de post-levée et fournit une libération efficace de l'herbicide de post-levée lorsque la formulation de poudre est ajoutée à de l'eau.

2. Formulation de poudre selon la revendication 1, dans laquelle le système adjuvant efficace comprend au moins un surfactant essentiellement non ionique à base d'oxyde d'alkylène ou à base d'organosilane.

3. Formulation de poudre selon la revendication 1, dans laquelle le système adjuvant efficace comprend un mélange d'au moins un surfactant essentiellement non ionique à base d'oxyde d'alkylène ou à base d'organosilane avec un ou plusieurs autres surfactants non ioniques ou ioniques.

4. Formulation de poudre selon la revendication 2 ou 3 , dans laquelle le ou chaque surfactant non ionique est un produit d'addition à base d'oxyde d'éthylène contenant au moins une mole d'oxyde de propylène.

5. Formulation de poudre selon l'une quelconque des revendications précédentes, dans laquelle l'herbicide de post-levée est un herbicide à base d'aryloxy-phénoxy-propionate, d'un cyclohexanedione ou d'un éther de diphényle.

6. Formulation de poudre selon la revendication 5, dans laquelle l'herbicide de post-levée est du clodinafop.

7. Formulation de poudre selon l'une quelconque des revendications précédentes, comprenant en outre un produit phytoprotecteur pour l'herbicide de post-levée.

8. Formulation de poudre selon la revendication 7, dans laquelle le produit phytoprotecteur est du cloquintocet.

9. Formulation de poudre selon la revendication 1, comprenant en outre un ou plusieurs agents dispersants et/ou agents mouillants.

10. Formulation de poudre selon la revendication 9, dans laquelle le dispersant est du N-méthyl-N-oleoyltaurate.

11. Formulation de poudre selon la revendication 1, dans laquelle la poudre support est hydrophile.

12. Formulation de poudre selon la revendication 1, dans laquelle la poudre support comprend des particules poreuses de silice ou des agrégats poreux de particules de silice.

13. Formulation de poudre selon la revendication 12, dans laquelle la poudre support a une taille moyenne de particule située dans la plage de 10 à 20 microns de diamètre.

14. Formulation de poudre selon la revendication 1, qui comprend en poids :
(i) de 5 à 25 % (de préférence environ 12 à 17 %) d'herbicide de post-levée ;
(ii) de 30 à 50 % (de préférence environ 35 à 45 %) de surfactant essentiellement non ionique à base d'oxyde d'alkylène pour servir de système adjuvant ;
(iii) de 0 à 6 % (de préférence environ 4 à 5 %) de dispersant ; et
(iv) de 25 à 50 % (de préférence environ 30 à 45 %) de poudre support.

15. Formulation de poudre selon la revendication 14, comprenant l'herbicide de post-émergence clodinafop, le phytoprotecteur cloquintocet et dans laquelle la quantité de cloquintocet est d'environ 25 % en poids de la quantité de clodinafop.

16. Procédé de préparation d'une formulation de poudre selon l'une quelconque des revendications 1 à 15, qui comprend les étapes consistant à dissoudre l'herbicide de post-levée dans un système adjuvant efficace, à incorporer la solution dans une poudre support par mélange intime et éventuellement à ajouter un agent dispersant et/ou un agent mouillant.

17. Dispersion aqueuse d'une formulation de poudre mouillable selon l'une quelconque des revendications 1 à 15.

18. Procédé d'administration d'un herbicide de post-levée en un lieu, comprenant :
(i) la formation d'une dispersion aqueuse d'une formulation de poudre mouillable selon l'une quelconque des revendications 1 à 15 ; et
(ii) l'application d'une quantité efficace de ladite dispersion aqueuse sur ledit lieu.

19. Utilisation d'une dispersion aqueuse d'une formulation de poudre mouillable selon l'une quelconque des revendications 1 à 15 pour administrer un herbicide de post-levée en un lieu.

20. Procédé de traitement herbicide de post-levée contre des plantes adventices visées dans une culture, qui comprend :
(i) la formation d'une dispersion aqueuse d'une formulation de poudre mouillable selon l'une quelconque des revendications 1 à 15 ; et
(ii) l'application d'une quantité capable d'avoir une action herbicide efficace de ladite dispersion aqueuse sur ladite culture.

21. Utilisation d'une dispersion aqueuse d'une formulation de poudre mouillable selon l'une quelconque des revendications 1 à 15, dans laquelle la formulation est employée pour un traitement herbicide de post-levée contre des plantes adventices dans une culture.
